# EUROPÄISCHE PATENTSCHRIFT

(11) **EP 1 117 706 B1**
(45) Veröffentlichungstag und Bekanntmachung des Hinweises auf die Patenterteilung: **12.01.2005**
(21) Anmeldenummer: 99947415.8
(22) Anmeldetag: 23.09.1999
(51) Int. Cl.: C08F 10/02, C02F 1/28

(54) **AKTIVKOHLEFILTER**
ACTIVATED CARBON FILTER
FILTRE AU CHARBON ACTIF

(30) Priorität: 25.09.1998 DE 19844167
(43) Veröffentlichungstag der Anmeldung: 25.07.2001
(73) Patentinhaber: Ticona GmbH, 65451 Kelsterbach (DE)
(72) Erfinder: HAFTKA, Stanislaw, D-46485 Wesel (DE); EHLERS, Jens, D-46499 Hamminkeln (DE); WANG, Louis, Missoury City, TX 77459 (US); BARTH, Christiane, D-46147 Oberhausen (DE)
(86) Internationale Anmeldenummer: PCT/EP1999/007086
(87) Internationale Veröffentlichungsnummer: WO 2000/018810

(56) Entgegenhaltungen:
- EP-A- 0 436 326
- EP-A- 0 554 223
- EP-A- 0 645 403
- EP-A- 0 767 181
- US-A- 4 921 825

## Beschreibung

Die vorliegende Erfindung betrifft ein neues Polymer als Binder zur Herstellung von Aktivkohlefilter.

Reinigungsfilter für die Reinigung von Flüssigkeiten oder Gasen sind bekannt. Bei einer Gruppe solcher Filter ist eine lose Schüttung von Körnern eines adsorbierenden Materials, wie Aktivkohle zwischen zwei porösen, die Körner zusammenhaltenden Wänden eingefüllt, siehe DE-A-32 04 022. Da hierbei kein Zusammenhalt innerhalb des Granulats besteht, sind dessen Durchfluss- und Filter Gebrauchsdauer schwer kontrollierbar. In der Strömung des Filtrats und infolge Erschütterungen können Umlagerungen verschiedener Anteile an Korngrößen oder Auswaschungen oder örtliche Verstopfungen durch Feinanteile auftreten. Vor allem aber kann die durch innere Porosität der Körner an sich gegebene Adsorptionsfähigkeit des Granulats in nur geringem Masse zur Wirkung kommen, da das Filtrat größtenteils in den Kornzwischenräumen am Filtermaterial vorbeiströmt und die Körner im wesentlichen nur oberflächlich berührt. Filtereinheiten dieser Art, auch Filterpatronen oder -kerzen genannt, müssen nach kurzer Einsatzdauer ersetzt oder im Granulat erneuert werden.

Ein anderes, der Reinigung von Leitungswasser dienendes Filter, welches als Filtereinheit, einen adsorptiven Formkörper aufweist, ist aus der EP-A-0 253 132 bekannt. Der Formkörper ist als selbsttragender Sinterkörper ausgebildet und besteht aus fein verteiltem Adsorptionsmittel und thermoplastischem Kunststoff - Bindermittel. Bei der Herstellung des Sinterkörpers durch thermoplastisches Sintern wird ein erheblicher Teil der Kornoberflächen und Mikroporen des Adsorptionsmittels durch anhaftendes und eindringendes thermisches Material verklebt oder verstopft, wobei die entsprechende innere Oberfläche der Kömer für die Adsorption verloren geht. Die Adsorptionskapazität der Filtereinheit, insgesamit ist dadurch beeinträchtigt.

Aus EP-A-0 554 223 ist ein Verfahren zur Herstellung einer Filtereinheit bekannt. Durch die hohe Viskosität des Binders ist eine geringere Festigkeit der erhaltenen Filtereinheit gegeben.

Aus EP-A-0 792 673 ist ein Binder zur Herstellung von Filtern nach der Extrusionstechnik bekannt. Der Binder hat eine sehr hohe Fließfähigkeit und weist eine inhomogene Verteilung auf. Die inhomogene Verteilung im Gemisch führt zu einem brüchigen Produkt. Daneben kommt es zur der Oberfläche der Aktivkohle durch den Binder. Die Folge ist eine Abnahme der Filterkapazität.

Aus US-A-4,753,728 ist ein Aktivkohle-Filterblock bekannt, der Aktivkohle-Partikeln enthält, die durch ein Polymer zu einem Filterblock gebunden sind. Das Polymer weist einen Schmelzindex von weniger als etwa 1 gram pro 10 Minuten auf, bestimmt durch STM D 1238 bei 190 °C und 15 Kilogramm Ladung. Das Polymer wird bei erhöhter Temperatur klebrig. Das Polymer wird nicht genügend flüssig, um im wesentlichen die Aktivkohle-Partikeln zu befeuchten. Es wird ein kommerziell erhältliches Polymer GUR® 212 offenbart, das einen Schmelzindex von weniger als 0.1 gram pro 10 Minuten aufweist, bestimmt durch STM D 1238 bei 190 °C und 15 Kilogramm Ladung und ein ultrahoch molekulares Polyethylen ist.

Die Aufgabe der vorliegenden Erfindung liegt darin, einen Binder zur Herstellung von Aktivkohlefilter mit hoher Festigkeit und niedrigem Bindegehalt bereitzustellen, wobei die Aktivkohle nicht beschichtet wird.

Die Aufgabe der vorliegenden Erfindung wird gelöst durch ein Polyethylenhomopolymer oder -copolymer mit einem Schmelzindex (MFR 190/15) von 1,4 g/10 min bis 3 g/10 min, einer Molekulargewichtsverteilung Mw/Mn von 4 bis 8, Schüttdichte von 0,15 g/cm³ bis 0,28 g/cm³ und Korngröße 80 µm bis 160 µm. Mit diesem Binder wird ein Aktivkohlefilter mit ganz besonders hoher Festigkeit und niedrigem Bindegehalt erhalten.

Der erfindungsgemäße Binder zeichnet sich durch eine sehr gute Biokompatibilität aus. Der Binder weist eine hohe Viskosität, niedrige Neigung zum Beschichten der Aktivkohle, hohe Porösität und niedrige Sensitivität für den Prozeß auf. Der Binder zeichnet sich aus durch niedrige Schüttdichte und hohe Oberfläche, besondere Morphologie und eine Korngröße von 100 µm bis 140 µm. Der Binder ist gekennzeichnet durch eine besonders gute Thermostabilität.

Eine Filtereinheit hergestellt mit dem erfindungsgemäßen Binder erhält eine hohe Adsorptionsfähigkeit der Aktivkohle und weist eine sehr poröse Struktur auf.

Als Bindemittel kommen organische, thermoplastische Stoffe in Frage. Erfindungsgemäß als besonders geeignet erweist sich ein Pulver eines hoch- oder ultrahochmolekularen, thermoplastischen Kunststoffes, insbesondere Polyethylen, welcher beim Erhitzen in einer viskosen Übergangsphase bindefähig ist und im Sinterprozeß mit Aktivkohle poröse Strukturen bildet.

Nach dem Sintern wird ein Aktivkohleblock mit einer hohen Adsorbtionsfähigkeit und einer guten mechanischen Festigkeit erhalten. Ein hoher Durchfluß des Filtrats wird durch die hohe Porösität ermöglicht.

Es können Reinigungsfilter nach Bedarf mit einer oder mehreren solchen Filtereinheiten gebaut werden. Anwendungen sind im Bereich der Brauchwasseraufbereitung, Abwasserreinigung, Trinkwasseraufbereitung, in der Getränke-, Lebensmittel- und chemischen Industrie, aber auch zum Reinigen von Gasen vorgesehen.

Eine weitere Ausgestaltung der Erfindung ist ein Filtermaterial. enthaltend das erfindungsgemäße Polyethylenhomopolymer oder -copolymer und Aktivkohle.

Bei Reinigungsfiltern für die Reinigung von Trinkwasser auf Basis von Aktivkohle wird in zwei Hauptgruppen unterschieden. Bei der ersten und älteren Variante wird die lose Aktivkohle in einen porösen Behälter gefüllt. Dabei besteht kein Zusammenhalt innerhalb des Granulats. Dies hat zur Folge, daß die Durchflußund Filtereigenschaften schwer kontrollierbar sind. Die Adsorptionsfähigkeit des Granulats kommt nur in geringem Maße zur Wirkung. Das Filtrat kann in den Kornzwischenräumen am Filtermaterial vorbei strömen und so kann die aktive Oberfläche der Aktivkohle nicht vollständig genutzt werden.

Ein weiterer Nachteil dieser Filter ist, daß sie sehr schnell bakteriell verseuchen. Die Aktivkohlekörner sind ein hervorragendes Nährmedium für Bakterien. Außerdem wirken solche Filter rein adsorptiv. Die mechanischen Filtereigenschaften sind schlecht oder nicht vorhanden.

Die zweite Möglichkeit besteht darin, das Filter als Sinterkörper zu formen. Dies wird erreicht, indem fein verteiltes Adsorptionsmittel, Aktivkohle, mit einem thermoplastischen Kunststoff vermischt werden und diese Mischung in einer Form durch thermoplastisches Sintern verfestigt wird. Hierbei wirkt der Thermoplast als Klebstoff. Er verstopft einen erheblichen Teil der Aktivkohle-Kornoberfläche und setzt so die aktive Oberfläche der Aktivkohle stark herab. Die Adsorptionseigenschaften dieser Filter sind niedrig.

Die Herstellung des erfindungsgemäßen Filterblocks erfolgt nach einem Verfahren, bei dem feste Formkörper mit hohen adsorptiven Eigenschaften und sehr guten mechanischen Filtereigenschaften erhalten werden. Die Herstellung dieses Filter erfolgt, indem sehr feine Aktivkohle mit einem hochmolekularen Polyethylen trocken gemischt wird. Das Gemisch wird in eine Form eingebracht und unter Ausschluß von Luftzufuhr auf eine Temperatur erhitzt, die wesentlich über dem Schmelzbereich des Bindemittels liegt. Bei diesen Temperaturen schmilzt das Bindemittel langsam. Die Verfahrensschritte trocken mischen, einfüllen, verdichten, erhitzen nach Zeitprogramm und ausformen sind auch bei Massenherstellung durchführbar.

Es wird als Filter ein fester selbsttragender Körper erhalten, der Filterfeinheiten bis unter 1 µm und hohe adsorptive Eigenschaften aufweisen kann. Die adsorptiven Eigenschaften der Aktivkohle sind nicht durch ein Verkleben mit dem Thermoplasten herabgesetzt. Mit dem Filterblock liegt eine Filterpatrone mit sehr guten mechanischen Filtereigenschaften und sehr hohen adsorptiven Eigenschaften vor.

Aufgrund seiner Filtereigenschaften ist der Filterblock zur Entfernung von den unterschiedlichsten Substanzen aus Wasser oder wäßrigen Lösungen geeignet. Die produzierten Filter einer Filtereinheit < 1 µm 10 µm könne durch Filtration Sand, Rost, Schmutz- und Kalkpartikel aber auch Asbestfasern reduzieren. Durch Adsorption können auch organische Schadstoffe wie CKWs, Pestizide (Atrazin, DDT und Lindan) und PAKs zurückgehalten werden.

Ein Vergleich mit geschütteten Aktivkohlefiltern zeigt eine um das 4,5-fache erhöhte Aufnahmekapazität. Es liegt auch eine Reinigungskraft hinsichtlich anorganischer Schwermetalle vor. Das Filter bindet große Anteile von Cadmium, Eisen, Blei und Kupfer. Da diese Schwermetalle sich bereits in noch erlaubten Konzentrationen auf die Gesundheit von Kleinkindern negativ auswirken können ist eine Reduzierung dieser Substanzen als überaus wichtig für ein Filtersystem anzusehen.

Bakteriologische und virologische Verunreinigungen stellen ein großes Problem bei dem Verzehr von Wasser dar. In vielen Gegenden der Welt wird Chlor dem Trinkwasser zur Desinfizierung zugesetzt. In geringen Mengen ist diese Substanz nicht giftig, führt jedoch zu starken Beeinträchtigungen im Geschmack des Wassers. Der Filterblock entfernt katalytisch das vorhandene Chlor nahezu vollständig.

Die Leistungen der Hauswasserfilter sind in erster Linie darauf ausgerichtet, Schadstoffe unterschiedlichster Art aus dem Trinkwasser zu entfemen. Je nach Anwendungsgebiet können Sie die passende Filterfeinheit auswählen. Zur Entfernung von Verschmutzungen, organischen und anorganischen Substanzen und schlechtem Geruch oder Geschmack sind die Filter einsetzbar. Sollen Bakterien aus dem Trinkwasser entfernt werden, müssen die Feinfilter mit Filterfeinheiten 0,5 µm oder 0,3 µm ausgewählt werden. Die Durchflußleistungen der Filter variieren mit der Filterfeinheit.

Eine bevorzugte Ausgestaltung der Erfindung ist ein Filtermaterial, enthaltend 1 Gew.-% bis 50 Gew.-% Polyethylenhomopolymer oder -copolymer und 50 Gew.-% bis 99 Gew.-% Aktivkohle.

Eine besonders bevorzugte Ausgestaltung der Erfindung ist ein Filtermaterial, enthaltend 5 Gew.-% bis 40 Gew.-% Polyethylenhomopolymer oder -copolymer und 60 Gew.-% bis 95 Gew-% Aktivkohle.

Eine ganz besonders bevorzugte Ausgestaltung der Erfindung ist ein Filtermaterial, enthaltend 8 Gew.-% bis 30 Gew.-% Polyethylenhomopolymer oder - copolymer und 70 Gew.-% bis 92 Gew-% Aktivkohle.

Eine weitere Ausgestaltung der Erfindung ist ein Filtermaterial, daß zusätzlich Additive enthält.

Eine weitere Ausgestaltung der Erfindung ist die Verwendung eines Polyethylenhomopolymers oder -copolymers als Binder für Filtermaterialien mit Aktivkohle.

Für das Reinigungsfilter sind auch abweichende Bauformen denkbar. Beim Herstellungsverfahren sind Varianten zu den Verfahrensschritten möglich. So richtet sich die Filtereinheit des mechanischen Feinfilters nach dem jeweiligen Verwendungszweck oder der minimalen Größe der im Filtrat vorkommenden festen Partikel. Maßgebend ist im Falle des Feinfilters, daß solche Partikel nicht bis in den Adsorptionskörper gelangen und ihn verstopfen. Anstelle von sinterfähigem Kunststoff-Pulver kommen durchaus auch andere Materialien für das Feinfilter oder für die Stützwände in Frage, wie poröse Keramik.

Falls besondere Anforderungen an die Keimfreiheit des Filtrats gestellt werden, kann das Feinfilter oder beide Stützwände mit einem bakterientötenden Mittel, wie fein verteiltem Silber, imprägniert werden. Wiederum sind auch andere organische Bindemittel für den Adsorptionskörper denkbar. Das Vorgehen beim Mischen und insbesondere die Temperaturführung beim Verschwelen und Sintern richten sich nach dem Bindemittel. Wesentlich dabei ist, daß im Endzustand des hergestellten Formkörpers die Poren des Adsorptionsmittel-Granulats nicht oder höchstens in geringem Maße durch das Bindemittel verstopft werden.

Die Erfindung wird anhand von einer Zeichnung und von Beispielen näher erläutert.

### Zeichnung

Die Zeichnung enthält die drei Abbildungen von SEM Untersuchungen.

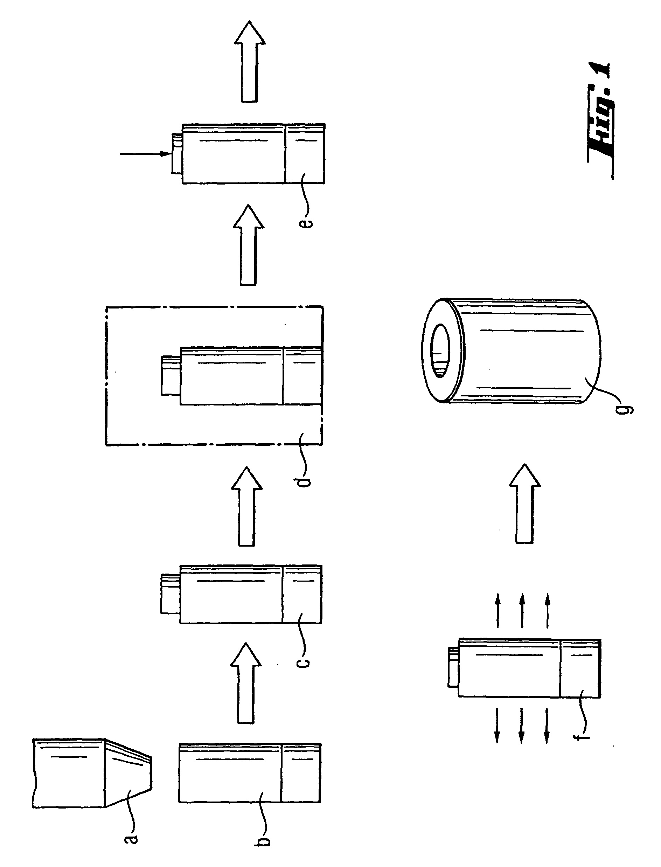

Abbildung 1 zeigt die Verfahrensschritte (a) trocken mischen, (b) einfüllen, (c) verschließen (d) erhitzen nach Zeitprogramm und als Sinterkörper ausformen, (e) verdichten, (f) abkühlen und (g) entnehmen. Feinverteilte Aktivkohle wird mit einem thermoplastischen Kunststoff vermischt und die Mischung in einer Form durch thermoplastisches Sintern verfestigt und als Sinterkörper ausgeformt.

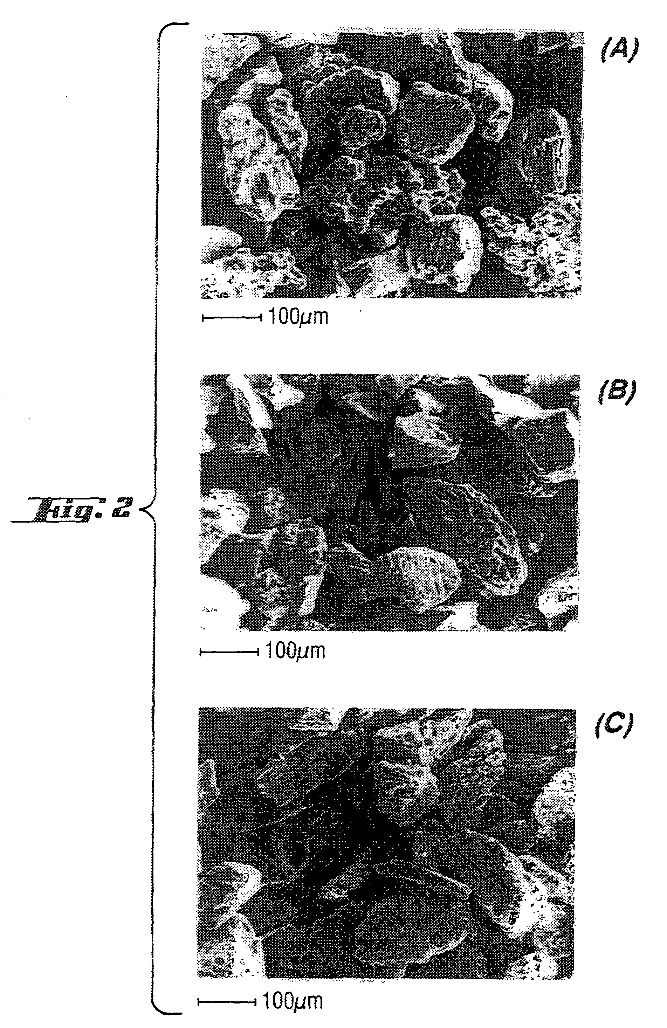

Abbildung 2 zeigt drei Raster-Elektronmikroskop-Aufnahmen. In allen drei Aufnahmen werden Filterblöcke gezeigt (A) Aktivkohle mit GUR® 2122, (B) Aktivkohle mit GUR® 2105 und (C) Aktivkohle mit HDPE. In (A) sind neben Aktivkohlepartikeln noch intakte GUR® 2122 mit unveränderter Morphologie zu beobachten. (B) zeigt ein Filter mit dem erfindungsgemäßen Bindematerial GUR®2105. Durch das geringfügige Fließverhalten des Binders ist die anfängliche Morphologie nicht mehr vorhanden. Die hohe Viskosität des Binders führt zu einer starken Brückenbildung zwischen den Aktivkohlekörnern. Eine Beschichtung der Aktivkohlekörner durch den Binder ist nicht zu beabachten. In (C) ist ein nicht gebundener Bereich der Aktivkohle abgebildet. Aufgrund des hohen Fließverhaltens des Binders, wie HDPE, EVA, LDPE oder ähnlichen Bindern kommt es zu einer inhomogenen Verteilung des Binders im Filterblock. Im abgebildeten Bereich ist trotz einer hohen Binderkonzentration im Filterblock kein Binder zu beobachten. Aufgrund der inhomogenen Verteilung ist das Filter brüchig.

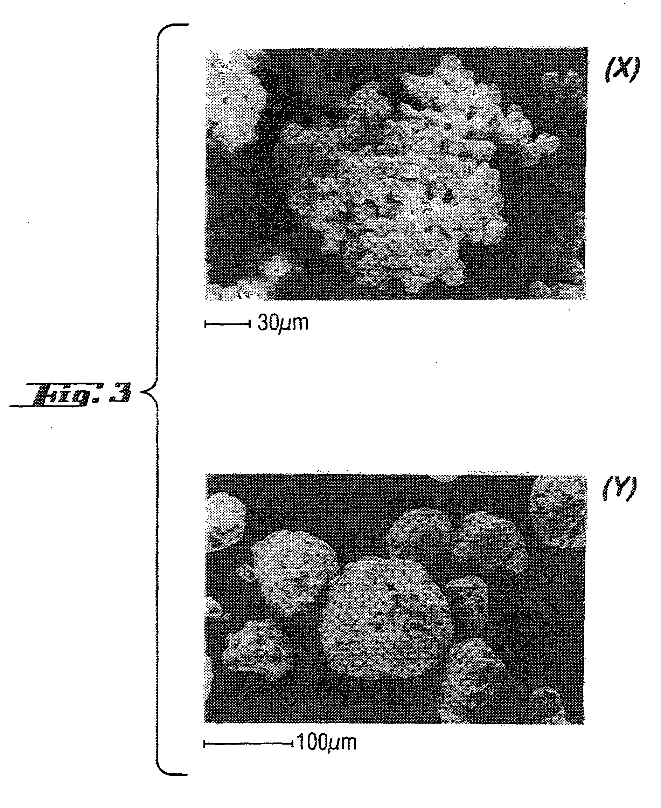

Abbildung 3 zeigt zwei Raster-Elektronenmikroskop-Aufnahmen. (X) zeigt das erfindungsgemäße Bindematerial GUR®2105. Der Binder zeichnet sich durch eine hohe Porosität und spezielle Morphologie aus. Durch diese Eigenschaften unterscheidet sich der erfindungsgemäße Binder erheblich von üblichen Bindermaterial, wie HDPE, LDPE, EVA und anderen. (Y) zeigt beispielhaft einen typischen UH-MWPE Pulver. Das abgebildete übliche Material (Y) zeigt eine kompakte Struktur und ist für die Herstellung hochporöser Körper weniger geeignet.

### Beispiele

### Beispiel

Drei Proben eines Filterblocks wurden wie in Abbildung 1 dargestellt mit den Zusammensetzungen wie in Abbildung 2 beschrieben angefertigt. Der erste Filterblock mit Aktivkohle und GUR® 2105 entspricht dem erfindungsgemäßen Binder und dem erfindungsgemäßen Filtermaterial. Als Vergleich dazu wurden Proben von Aktivkohle mit GUR® 2122 und Aktivkohle mit HDPE als Vergleiche angefertigt. Die nachstehende Tabelle 1 zeigt als Vergleich die erhaltenen Ergebnisse für die Eigenschaften der erhaltenen Proben.

**Tabelle 1**

| Komponenten | Zusammensetzung | Druckabnahme | APS | Eigenschaften |
|---|---|---|---|---|
| | [%] | [mbar] | [µm] | |
| GUR® 2105 | 25 | 12 | 16 | Hohe Adsorbtionsfähigkeit |
| Aktivkohle | 75 | | | Hohe Festigkeit |
| GUR® 2122 | 25 | 17 | 16 | Hohe Adsorbtionsfähigkeit |
| Aktivkohle | 75 | | | Niedrige Festigkeit |
| HDPE | 25 | 26 | 11 | Niedrige Adsorbtionsfähigkeit |
| Aktivkohle | 75 | | | Niedrige Festigkeit Brüchigkeit |

## Patentansprüche

1. Polyethylenhomopolymer oder -copolymer mit
| | |
|---|---|
| Schmelzindex (MFR 190/15) | von 1,4 g/10 min bis 3 g/10 min, |
| Molekulargewichtsverteilung Mw/Mn | von 4 bis 8, |
| Schüttdichte | von 0,15 g/cm³ bis 0,28 g/cm³ und |
| Korngröße | 80 µm bis 160 µm. |

2. Filtermaterial, enthaltend Polyethylenhomopolymer oder -copolymer nach Anspruch 1 und Aktivkohle.

3. Filtermaterial nach Anspruch 2, enthaltend 1 Gew.-% bis 50 Gew.-% Polyethylenhomopolymer oder -copolymer und 50 Gew.-% bis 99Gew-% Aktivkohle.

4. Filtermaterial nach Anspruch 2 oder 3, enthaltend 5 Gew.-% bis 40 Gew.-% Polyethylenhomopolymer oder -copolymer und 60 Gew.-% bis 95 Gew-% Aktivkohle.

5. Filtermaterial nach einem oder mehreren der Ansprüche 2 bis 4, enthaltend 8 Gew.-% bis 30 Gew.-% Polyethylenhomopolymer oder -copolymer und 70 Gew.-% bis 92 Gew-% Aktivkohle.

6. Filtermaterial nach einem oder mehreren der Ansprüche 2 bis 5, enthaltend zusätzlich Additive.

7. Verwendung eines Polyethylenhomopolymers oder -copolymers nach Anspruch 1 als Binder für Filtermaterialien mit Aktivkohle.

## Claims

1. A polyethylene homopolymer or copolymer having
| | |
|---|---|
| a melt flow index (MFI 190/15) | of from 1.4 g/10 min to 3 g/10 min, |
| a polydispersity M_{w}/Mₙ | of from 4 to 8, |
| a bulk density | of from 0.15 g/cm³ to 0.28 g/cm³ and |
| a particle size | from 80 µm to 160 µm. |

2. A filter material comprising a polyethylene homopolymer or copolymer as claimed in claim 1 and activated carbon.

3. A filter material as claimed in claim 2 comprising from 1% by weight to 50% by weight of polyethylene homopolymer or copolymer and from 50% by weight to 99% by weight of activated carbon.

4. A filter material as claimed in claim 2 or 3 comprising from 5% by weight to 40% by weight of polyethylene homopolymer or copolymer and from 60% by weight to 95% by weight of activated carbon.

5. A filter material as claimed in one or more of claims 2 to 4 comprising from 8% by weight to 30% by weight of polyethylene homopolymer or copolymer and from 70% by weight to 92% by weight of activated carbon.

6. A filter material as claimed in one or more of claims 2 to 5 further comprising additives.

7. The use of a polyethylene homopolymer or copolymer as claimed in claim 1 as binder for filter materials comprising activated carbon.

## Revendications

1. Homopolymère ou copolymère de polyéthylène à
| | |
|---|---|
| indice de fluidité à chaud (MFR 190/15) | de 1,4 g/10 min à 3 g/10 min, |
| distribution de masses | |
| moléculaires Mw/Mn | de 4 à 8, |
| densité apparente | de 0,15 g/cm³ à 0,28 g/cm³ et |
| taille de grain | de 80 *µ*m à 160 *µ*m. |

2. Matière filtrante contenant un homopolymère ou copolymère de polyéthylène selon la revendication 1 et du charbon actif.

3. Matière filtrante selon la revendication 2, contenant 1 % en poids à 50 % en poids d'homopolymère ou copolymère de polyéthylène et 50 % en poids à 99 % en poids de charbon actif.

4. Matière filtrante selon la revendication 2 ou 3, contenant 5 % en poids à 40 % en poids d'homopolymère ou copolymère de polyéthylène et 60 % en poids à 95 % en poids de charbon actif.

5. Matière filtrante selon une ou plusieurs des revendications 2 à 4, contenant 8 % en poids à 30 % en poids d'homopolymère ou copolymère de polyéthylène et 70 % en poids à 92 % en poids de charbon actif.

6. Matière filtrante selon une ou plusieurs revendications 2 à 5, contenant en outre des additifs.

7. Utilisation d'un homopolymère ou copolymère de polyéthylène selon la revendication 1, en tant que liant pour des matières filtrantes à charbon actif.
